# EUROPÄISCHE PATENTSCHRIFT

(11) **EP 0 555 516 B1**
(45) Veröffentlichungstag und Bekanntmachung des Hinweises auf die Patenterteilung: **23.08.1995**
(21) Anmeldenummer: 92109964.4
(22) Anmeldetag: 13.06.1992
(51) Int. Cl.: B23B 31/12

(54) **Bohrfutter**
Drill chuck
Mandrin de foret

(30) Priorität: 05.02.1992 DE 4203200
(43) Veröffentlichungstag der Anmeldung: 18.08.1993
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 370 159
- EP-A- 0 413 046
- DE-A- 3 617 105
- DE-A- 3 914 311
- GB-A- 2 154 927

## Beschreibung

Die Erfindung betrifft ein Bohrfutter mit einem an eine Bohrspindel anschließbaren Futterkörper, mit zwischen sich eine Aufnahme für das Bohrwerkzeug bildenden Futterbacken, die zum Öffnen und Schließen des Bohrfutters durch eine am Futterkörper drehbar und axial unverschiebbar geführte Stellhülse verstellbar sind, und mit einem am Futterkörper axial verschiebbar geführten Sperring zum Verriegeln der Stellhülse, wozu der Sperring eine Verzahnung aufweist, die in gegen die Stellhülse vorgeschobener Lage des Sperrings in eine Gegenverzahnung an der Stellhülse greift und in von der Stellhülse zurückgezogener Lage des Sperrings an der Gegenverzahnung außer Eingriff steht, wobei am Futterkörper drehbar ein Betätigungsring geführt und zwischen dem Betätigungsring und dem Sperring eine Getriebeverbindung vorgesehen ist, die beim Verdrehen des Betätigungsringes den Sperring zwischen seinen beiden, die Stellhülse verriegelnden bzw. freigebenden Axiallagen verschiebt.

Ein derartiges Bohrfutter ist aus der DE 36 17 105 A1 bekannt, bei dem der Betätigungsring in einem Gewinde auf dem Futterkörper geführt ist. Die Getriebeverbindung zwischen dem Betätigungsring und dem am Futterkörper unverdrehbaren Sperring ist gleichfalls durch ein Gewinde gebildet. Der Betätigungsring wird in dem Gewinde auf dem Futterkörper verdreht und dadurch in seiner Axiallage verstellt. Damit verbunden ist auch die Verstellung des Sperrings zwischen seiner axial vorgeschobenen und seiner zurückgezogenen Lage, bei der er in bzw. außer Eingriff mit der Verzahnung an der Stellhülse ist. - Dieses Bohrfutter hat keine selbstspannende oder nachspannende Eigenschaften; um ein Spannen ohne Spannschlüssel mit ausreichender Spannkraft zu ermöglichen, weisen die Gewinde eine Steigungsdifferenz auf, wodurch beim Verdrehen des Betätigungsrings die Futterbacken mit großer Kraft gegen das Bohrwerkzeug verstellt werden, wenn der Sperring bereits in Eingriff mit der Verzahnung der Stellhülse ist. Um ein unbeabsichtigtes Verstellen der Futterbacken während des Betriebs zu vermeiden, ist weiterhin eine Verriegelungshülse notwendig, die aus einer die Verdrehung des Betätigungsrings ermöglichenden Lage in eine diesen verriegelnde Lage axial verstellt wird.

Bei einem aus der EP 0 164 516 B1 bekannten Bohrfutter, das mit einem an der Stellhülse zum Eingriff kommenden Schlüssel zu spannen und zu lösen ist und bei dem die Futterbacken im Futterkörper geführt sind, ist der Sperring zwischen zwei Grenzstellungen verdrehbar. In der Wand des Sperrings befinden sich zwei nebeneinander verlaufende, verschieden lange axiale Nuten, die an ihrem der Stellhülse zugewandten Ende für den Eintritt eines am Futterkörper angeordneten, radial abstehenden Anschlagkopfes offen sind. In der ersten Grenzstellung des Sperrings fluchtet die längere Nut, in der zweiten Grenzstellung die kürzere Nut mit dem Anschlagkopf. In dieser letzteren Grenzstellung kann sich der Sperring mit dem von der Stellhülse abgewandten Ende der kürzeren Nut am Anschlagkopf gegen die Kraft einer Feder abstützen, wodurch der Sperring außer Eingriff an der Stellhülse gehalten wird. In der ersten Grenzstellung dagegen findet der Anschlagkopf in der längeren Nut keinen axialen Anschlag, so daß sich der Sperring gegen die Stellhülse bis zum vollständigen Eingriff der Verzahnung in die Gegenverzahnung vorschieben kann. - Zum Verstellen des Sperrings zwischen seinen beiden die Stellhülse verriegelnden bzw. freigebenden Axiallagen ist es daher erforderlich, den Sperring zunächst gegen die Feder so weit axial zurückzuschieben, daß der Anschlagkopf aus der jeweiligen Nut austritt, und dann den Sperring so weit zu verdrehen, daß der Anschlagkopf mit der anderen Nut fluchtet und in diese axial eintreten kann, wenn der Sperring losgelassen und durch die Kraft der Feder wieder vorgeschoben wird, wobei aber darauf geachtet werden muß, daß der Anschlagkopf auch tatsächlich in die Nut eintritt.

Bohrfutter der eingangs genannten Art, allerdings ohne Betätigungsring, sind auch in selbstspannender bzw. nachspannender Ausführungsform mit in der Spannhülse geführten Futterbacken bekannt. Um bei einem solchen Bohrfutter die Nachspannung zu begrenzen, ist es aus der DE 39 03 443 C1 bekannt, den Sperring am Futterkörper zwischen zwei Grenzstellungen verdrehbar anzuordnen, die in Umfangsrichtung des Futterkörpers um den Nachspannweg auseinander liegen, der im Rahmen der Nachspannungsbegrenzung maximal zulässig sein soll. Zur Festlegung der beiden Grenzstellungen des Sperrings besitzt der Futterkörper zwei achsenparallele, sich jeweils über den axialen Verschiebungsbereich des Sperrings erstreckende Planflächen. Jeder Planfläche stehen am Sperring zwei achsenparallele und zueinander schräge Anschlagflächen gegenüber, die in der auf der Planfläche des Futterkörpers senkrechten Axialebene ineinander übergehen und durch ihre gegenseitige Schrägstellung den Winkel bestimmen, um den der Sperring zum Nachspannen gegenüber dem Futterkörper maximal verdrehbar ist. - Bei dem aus DE 37 27 147 A1 bekannten nachspannenden Bohrfutter sind die beiden Grenzstellungen des Sperrings durch eine Ausnehmung am Sperring und einen darin eingreifenden, am Futterkörper festen Anschlagstift festgelegt. - Bei derartigen nachspannenden Bohrfuttern muß darauf geachtet werden, daß sich der Sperring vor Beginn der Bohrarbeiten nicht nur in seiner die Stellhülse verriegelnden Axiallage, sondern hinsichtlich seiner Verdrehbarkeit auch in derjenigen Grenzstellung befindet, aus der heraus er sich im Sinne der Nachspannung in die andere Grenzstellung verdrehen kann, damit der Nachspannvorgang überhaupt möglich ist und dabei der Nachspannweg in ganzer Länge zur Verfügung steht. Auch hier muß daher der Sperring zu seiner Einstellung sowohl in axialer Richtung als auch in Umfangsrichtung betätigt und dabei auf die richtige Ausgangsstellung des Sperrings geachtet werden.

Im Ergebnis verlangt bei allen diesen bekannten Bohrfuttern das Einstellen des Sperrings Kenntnis, Aufmerksamkeit und Übung, was in Verbindung mit Bohrmaschinen, die überwiegend zum Gebrauch durch Laien bestimmt sind, keineswegs immer im gebotenen Umfang vorausgesetzt werden darf.

Der Erfindung liegt die Aufgabe zugrunde, ein selbstspannendes bzw. nachspannendes Bohrfutter so auszubilden, daß der Sperring in einfacher Weise ohne besondere Kenntnis und Aufmerksamkeit betriebssicher zwischen seinen beiden die Stellhülse verriegelnden bzw. freigebenden Endlagen verstellt werden kann und dabei in jedem Fall die Nachspannmöglichkeit gewährleistet ist.

Diese Aufgabe wird bei einem Bohrfutter nach der Erfindung in Verbindung mit den eingangs genannten Merkmalen dadurch gelöst, daß bei einem Bohrfutter in nachspannender Ausführungsform mit Nachspannungsbegrenzung der Sperring am Futterkörper zwischen zwei Grenzstellungen verdrehbar ist, die in Umfangsrichtung des Futterkörpers um den Nachspannweg auseinander liegen, der im Rahmen der Nachspannungsbegrenzung maximal zugelassen ist, und daß beim Verdrehen des am Futterkörper axial unverschiebbar geführten Betätigungsrings die Getriebeverbindung den Sperring zwischen den beiden Grenzstellungen verdreht.

Der durch die Erfindung erreichte Vorteil besteht somit darin, daß zur richtigen Einstellung des Sperrings allein das Verdrehen des Betätigungsringes genügt. Dabei erteilt der Betätigungsring über die Getriebeverbindung dem Sperring automatisch diejenigen Bewegungen, die er axial zwischen den beiden die Stellhülse verriegelnden bzw. freigebenden Axialstellungen und in Drehrichtung zwischen seinen beiden Grenzstellungen ausführen muß, um in die jeweils richtige Einstellung zu gelangen. Das vereinfacht und erleichtert die Einstellung des Sperrings ganz wesentlich, da es von Hand am Betätigungsring nur noch einer drehenden Verstellung bedarf, um in völlig betriebssicherer Weise den Sperring aus jeder seiner beiden möglichen Endstellungen in die jeweils andere Endstellung zu bringen.

Vorzugsweise ist dabei die Drehrichtung des Betätigungsrings zum Verriegeln der Stellhülse deren Drehrichtung zum Schließen des Bohrfutters entgegengesetzt, so daß beim Verdrehen des Betätigungsrings zwecks Verschieben des Sperrings in dessen die Stellhülse verriegelnde Axiallage zugleich auch der Sperring vom Betätigungsring in Drehrichtung in diejenige Grenzstellung mitgenommen wird, aus der heraus das Nachspannen möglich ist.

Vorteilhaft ist weiterhin, wenn zur Nachspannungsbegrenzung der Futterkörper mindestens eine zur Achse des Futterkörpers parallele und sich über den Verschiebungsbereich des Sperrings erstreckende Planfläche aufweist, der am Sperring zwei jeweils zur Achse des Futterkörpers parallele und zueinander schräge Anschlagflächen gegenüberstehen, die in der auf der Planfläche des Futterkörpers senkrechten Axialebene ineinander übergehen und durch ihre gegenseitige Schrägstellung den Winkel bestimmen, um den der Sperring zum Nachspannen gegenüber dem Futterkörper maximal verdrehbar ist.

Die Getriebeverbindung zwischen dem Betätigungsring und dem Sperring kann in konstruktiv sehr einfacher und daher vorteilhafter Weise als ein Kurvengetriebe mit einer Stellkurve am einen Teil (Betätigungsring oder Sperring) und einem von der Stellkurve gesteuerten Stellglied am anderen Teil ausgebildet sein. Die Verstellung des Sperrings durch den Betätigungsring kann dabei gegen eine Feder erfolgen. Im Hinblick auf die Betriebssicherheit aber empfiehlt sich als bevorzugte Ausführungsform, daß die Getriebeverbindung in axialer Richtung eine Zwangsführung des Sperrings am Betätigungsring bildet. Die Stellungen des Betätigungsrings und des Sperrings sind dann zwangsläufig aneinander gekuppelt. Eine hierfür sehr zweckmäßige Ausführungsform ist dadurch gekennzeichnet, daß zur Bildung der Stellkurve in der äußeren Umfangsfläche des Sperrings eine Steuernut verläuft, in die als Stellglied axial formschlüssig ein Steuervorsprung greift, der an einem die Umfangsfläche des Sperrings außen übergreifenden Kragen des Betätigungsringes sitzt. Es besteht aber auch die ebenfalls sehr vorteilhafte Möglichkeit, daß der Sperring mindestens einen axial durch ein Fenster im Betätigungsring greifenden Zapfen aufweist, der axial beidseits des Fensters je einen über den Fensterrand ausgreifenden Stift trägt, der als Stellglied axial formschlüssig an den als Stellkurve ausgebildeten Fensterrändern geführt ist. Die Stifte sind vorzugsweise als drehbar im Zapfen gelagert und auf den Stellkurven abrollende Walzen ausgebildet. Ein solches Kurvengetriebe zeichnet sich durch besonders geringe Reibungsverluste aus, die entsprechend geringere Stellkräfte für das Verdrehen des Betätigungsrings zur Folge haben. - Eine ebenfalls vorteilhafte Ausführungsform der Getriebeverbindung besteht darin, die Getriebeverbindung als Gewindetrieb auszubilden, bestehend aus einem Außengewinde an der äußeren Umfangsfläche des Sperrings und einem damit im Eingriff stehenden Innengewinde an einem den Sperring außen übergreifenden Kragen des Betätigungsrings. Vorzugsweise ist der Gewindetrieb mit einem mehrgängigen Gewinde ausgebildet. Zumindest die Gewindegänge des Außengewindes können sich zweckmäßigerweise jeweils abschnittsweise nur über einen Teil des Ringumfangs erstrecken, wobei sich in Umfangsrichtung zwischen den Gewindegangabschnitten gewindefreie Lücken befinden, vorzugsweise derart, daß die Gewindegangabschnitte jeweils in gleicher Umfangslänge und mit untereinander axial fluchtenden Gangenden angeordnet sind. Ein solcher Gewindetrieb ist nicht nur leicht zu fertigen, sondern ermöglicht auch eine einfache Montage. Zudem ist er in axialer Richtung vergleichsweise hoch belastbar, ohne nennenswerten Verschleißerscheinungen ausgesetzt zu sein, so daß sich dieser Gewindetrieb vor allem eignet, wenn der Sperring und/oder der Betätigungsring aus Kunststoff bestehen.

Um auszuschließen, daß sich der Sperring und der Betätigungsring während des Bohrbetriebs selbsttätig verstellen können, empfiehlt es sich, eine den Sperring in seinen beiden die Stellhülse verriegelnden, bzw. freigebenden Axiallagen fixierende Rasteinrichtung vorzusehen. Diese Rasteinrichtung kann zwischen dem Sperring und dem Futterkörper ausgebildet sein, aus einem federnden Rastglied am einen Teil (Sperring oder Futterkörper) sowie Rastaufnahmen für das Rastglied am anderen Teil bestehen und im eingerasteten Zustand die Axialverstellung des Sperrings gegenüber dem Futterkörper behindern. Der Betätigungsring ist dann über das Kurvengetriebe zwangsläufig gegen unbeabsichtigte Verdrehungen gesichert. In einer besonders zweckmäßigen Ausführungsform, die große Rastkräfte ermöglicht, besteht das Rastglied aus einem umfangsmäßig aufgetrennten Federring in einer Ringnut des Sperrings und aus zwei die Rastaufnahmen bildenden Ringnuten im Futterkörper. Ferner kann das Rastglied in einer ebenfalls vorteilhaften Ausgestaltung aus wenigstens einem im Sperring radial verstellbar angeordneten und unter der Kraft einer Feder dem Futterkörper anliegenden Raststift bestehen und die Rastaufnahmen aus einer Ringnut im Futterkörper sowie aus an die Ringnut auf der den Futterbacken abgewandten Seite anschließenden und axial zum Futterkörper verlaufenden, einen Zahnkranz bildenden Rastnuten bestehen. Dabei kann zur leichteren Verstellung des Sperrings zwischen der Ringnut und den Rastnuten eine zur Ringnut hin sich konisch verjüngende Anlaufschräge für den Raststift vorgesehen sein, zur einfacheren Montage kann der Raststift in einer die Feder aufnehmenden Hülse angeordnet sein. Weiter kann es bei dieser Ausgestaltung vorteilhaft sein, wenn das Rastglied von drei gleichmäßig über den Umfang des Sperrings angeordneten Raststiften gebildet ist, die in axialer Richtung des Sperrings um einen gegenüber dem Verstellhub des Sperrings kleinen Abstand gegeneinander versetzt angeordnet sind. Auf diese Weise gehen die Raststifte bei einer Verstellung des Sperrings nicht gleichzeitig sondern nacheinander von der einen in die andere Rastaufnahme über. - Es besteht schließlich auch die Möglichkeit, die Rasteinrichtung zwischen dem Sperring und dem Betätigungsring auszubilden, wobei sie aus einem federnden Rastglied am einen Teil (Sperring oder Betätigungsring) sowie Rastaufnahmen für das Rastglied am anderen Teil besteht und im eingerasteten Zustand das Verdrehen des Betätigungsrings gegenüber dem Sperring behindert, wodurch wiederum über das Kurvengetriebe Axialverstellungen des Sperrings ausgeschlossen sind.

Handelt es sich um ein Bohrfutter ohne selbsttätig nachspannende Eigenschaften, bei dem zur einfacheren Betätigung auf die Möglichkeit einer Schlüsselspannung verzichtet wird, muß das Futter von Hand durch Fassen an der Stellhülse einerseits und am Betätigungsring andererseits ausreichend fest angezogen werden können. Das dabei erreichbare Spannmoment und damit die Festigkeit der Bohrereinspannung können aber durch die Rasteinrichtung für den Sperring begrenzt sein. Ist nämlich das von Hand aufgebrachte Moment so groß, daß die Getriebeverbindung zwischen dem Betätigungsring und dem Sperring letzteren aus seiner Rast in die Sperrstellung verstellt, kann die Bohrereinspannung nicht mehr fester werden, weil der Sperring einen weiteren Spannvorgang durch die Sperrung der Stellhülse verhindert. Um eine solche vorzeitige Sperrung der Stellhülse zu verhindern, sind in weiterer Ausbildung der Erfindung in Verbindung mit dem Betätigungsring Mittel zum direkten Halten des Sperrings von Hand vorgesehen. Man kann dann durch unmittelbaren Zugriff der Hände am Sperring und damit indirekt am Futterkörper einerseits und an der Stellhülse andererseits nach Wunsch mit mehr oder weniger großem Kraftaufwand das Bohrfutter spannen und erst dann durch weitere Handhabung des Betätigungsrings statt des Sperrings letzteren aus seinem Rastsitz lösen und in die Sperrstellung verschieben. Diese Mittel zum direkten Halten des Sperrings können in verschiedener Weise ausgebildet sein; jedoch bestehen sie in einer konstruktiv und hinsichtlich der Handhabung besonders einfachen und daher bevorzugten Ausführungsform aus einem von Hand faßbaren Bremsring, der koaxial und axial unverschiebbar am Betätigungsring angeordnet ist und auf seiner Innenseite dem Sperring anliegende Bremsflächen aufweist, mit welcher er von Hand gegen den Sperring andrückbar ist, so daß sich je nach ausgeübtem Druck ein mehr oder weniger fester Reibschluß zwischen dem Bremsring und dem Sperring ergibt und auf diese Weise der Sperring mittels des Bremsrings festgehalten werden kann. Im einzelnen empfiehlt es sich, die Anordnung so zu treffen, daß der Bremsring von Hand radial federnd zusammendrückbar ist und dazu in Umfangsrichtung aufeinander folgende Axialschlitze aufweist, die abwechselnd zum einen und zum anderen Ringrand hin offen sind.

Im folgenden wird die Erfindung an in der Zeichnung dargestellten Ausführungsbeispielen näher erläutert; es zeigen:
- Fig. 1: ein Bohrfutter nach der Erfindung, teils in Seitenansicht, teils in einem Axialschnitt,
- Fig. 2: den Schnitt II-II in Fig. 1
- Fig. 3: den Schnitt III-III in Fig. 1,
- Fig. 4: einen Axialschnitt durch den Sperring des Bohrfutters nach Fig. 1,
- Fig. 5: die Stirnansicht des Sperrings in Richtung des Pfeiles V in Fig. 4,
- Fig. 6: die Stirnansicht des Sperrings in Richtung des Pfeiles VI in Fig. 4,
- Fig. 7: einen Axialschnitt durch den Betätigungsring des Bohrfutters nach Fig. 1 längs der Schnittlinie VII-VII in Fig. 8,
- Fig. 8: die Stirnansicht des Betätigungsrings nach Fig. 7 in Richtung des Pfeiles VIII,
- Fig. 9: die Stirnansicht des Betätigungsrings nach Fig. 7 in Richtung des Pfeiles IX,
- Fig.10: eine andere Ausführungsform des erfindungsgemäßen Bohrfutters in einer der Fig. 1 entsprechenden Darstellung,
- Fig.11: einen Axialschnitt durch den Sperring des Bohrfutters nach Fig. 10 längs der Schnittlinie XI-XI in Fig. 12,
- Fig.12: die Stirnansicht des Sperrings der Fig. 11 in Richtung des Pfeiles XII,
- Fig.13: eine Seitenansicht des Sperrings in Fig. 11 in Richtung des Pfeiles XIII,
- Fig.14: einen Axialschnitt durch den Betätigungsring des Bohrfutters nach Fig. 10,
- Fig.15: die Stirnansicht des Betätigungsringes der Fig. 14 in Richtung des Pfeiles XV,
- Fig.16: bis 18 weitere erfindungsgemäße Ausführungsformen eines Bohrfutters, jeweils in einer der Fig. 1 entsprechenden Darstellung,
- Fig.19: den Schnitt XIX - XIX in Fig. 18 und
- Fig.20: eine Detaildarstellung des Sperrings mit dem Rastglied,
- Fig.21: einen Axialschnitt nur durch den Sperring des Bohrfutters nach Fig. 17,
- Fig.22: eine Seitenansicht des Sperrings nach Fig. 21,
- Fig.23: die Stirnansicht des Sperrings nach Fig. 21 in Richtung des dort eingetragenen Pfeils XXIII,
- Fig.24: den Betätigungsring des Bohrfutters nach Fig. 17 im Axialschnitt und
- Fig.25: ein weiteres Bohrfutters nach der Erfindung ohne Selbst- und Nachspannwirkung, teils in Seitenansicht, teils im Axialschnitt.

Die in der Zeichnung dargestellten selbst- bzw. nachspannenden Bohrfutter 1 sind zum Betrieb an einer Schlagbohrspindel bestimmt, die in der Zeichnung selbst nicht dargestellt ist. Das Bohrfutter 1 besitzt drei Futterbacken 2, die geneigt zur Futterachse 3 in Führungsbohrungen 4 einer Stellhülse 5 geführt sind. Der Futterkörper 6 trägt ein Stellgewinde 7 zum Verstellen der Futterbacken 2. Die Stellhülse 5 und der Futterkörper 6 sind gegenseitig verdrehbar aneinander geführt und axial kraftschlüssig gegeneinander abgestützt, wozu Wälzkugeln 8 dienen, die einerseits an einem Außenbund 9 des Futterkörpers 6, andererseits an einer fest mit der Stellhülse 5 verbundenen Ringscheibe 10 laufen. Diese kraftschlüssige Abstützung dient dazu, die sich bei der Spannung der Futterbacken 2 ergebende Reaktionskraft auf den Futterkörper 6 gegen die Stellhülse 5 abzufangen, so daß sich der aus den Spannkräften ergebende Kraftfluß zwischen dem Futterkörper und der Stellhülse schließen kann. Im einzelnen besitzt der Futterkörper 6 eine Kegelfläche 11, die parallel zur Führungsrichtung der Futterbacken 2 verläuft und auf der sich das Stellgewinde 7 befindet, das an jeder Futterbacke 2 mit einer Querverzahnung 12 im Eingriff steht. Werden im Ergebnis die Stellhülse 5 und der Futterkörper 6 gegeneinander verdreht, werden je nach Drehsinn die Futterbacken 2 durch das Stellgewinde 7 im Sinne eines Schließens oder Öffnens der zwischen den Futterbacken 2 gebildeten Aufnahme für das nicht dargestellte Bohrwerkzeug verstellt.

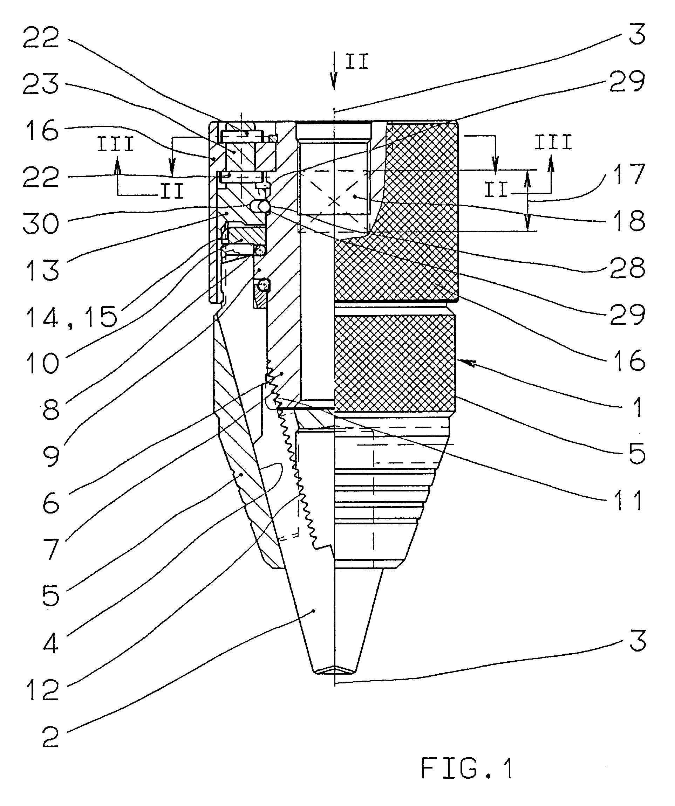

Zum Verriegeln der Stellhülse 5 dient ein am Futterkörper 6 axial verschiebbar geführter Sperring 13, der eine Verzahnung 14 aufweist, die in gegen die Stellhülse 5 vorgeschobener, jeweils in den Fig. 1, 10, 16 und 17 gezeigter Axiallage in eine an der Ringscheibe 10 ausgebildete Gegenverzahnung 15 der Stellhülse 5 greift und in von der Stellhülse 5 zurückgezogener Lage des Sperrings 13 an der Gegenverzahnung 15 außer Eingriff steht, so daß die Stellhülse 5 unbehindert durch den Sperring 13 verdreht werden kann. Zu dieser Axialverstellung des Sperrings 13 dient ein am Futterkörper 6 drehbar und axial unverschiebbar geführter Betätigungsring 16. Zwischen diesem Betätigungsring 16 und dem Sperring 13 ist eine im folgenden noch näher zu beschreibende Getriebeverbindung vorgesehen, die beim Verdrehen des Betätigungsringes 16 den Sperring 13 zwischen seinen beiden Axiallagen, in welchen er die Stellhülse 5 verriegelt oder frei gibt, verschiebt. Dieser axiale Verschiebungsbereich ist lediglich in Fig. 1 durch den Doppelpfeil 17 angedeutet.

Zur Nachspannungsbegrenzung ist der Sperring 13 am Futterkörper 6 zwischen zwei Grenzstellungen verdrehbar, die in Umfangsrichtung des Futterkörpers 6 um den Nachspannweg auseinanderliegen, der im Rahmen der Nachspannungsbegrenzung maximal zugelassen ist. Im einzelnen besitzt dazu der Futterkörper 6 zwei sich drehsymmetrisch gegenüberliegende achsenparallele und sich über den Verschiebungsbereich (Doppelpfeil 17) des Sperrings 13 erstreckende Planflächen 18. Diesen Planflächen stehen am Sperring 13 je zwei achsenparallele und zueinander schräge Anschlagflächen 19 gegenüber, die in der auf der Planfläche 18 des Futterkörpers 6 senkrechten Axialebene bei 20 ineinander übergehen und durch ihre gegenseitige Schrägstellung den Winkel bestimmen, um den der Sperring 13 zum Nachspannen gegenüber dem Futterkörper 6 maximal verdrehbar ist. Die Drehrichtung des Betätigungsringes 16 zum Verschieben des Sperrings 13 in dessen die Stellhülse 5 verriegelnde Axiallage ist entgegengesetzt zur Drehrichtung der Stellhülse 5 beim Schließen des Bohrfutters 1. Wird also der Betätigungsring 16 so verdreht, daß der Sperring 13 die Stellhülse 5 verriegelt, ist gleichzeitig sicher gestellt, daß sich der Sperring 13 hinsichtlich seiner Verdrehbarkeit in derjenigen Grenzstellung befindet, die eine Nachspannung ermöglicht und aus der sich der Sperring 13 beim Nachspannvorgang bis in die andere Grenzstellung bewegen kann, in der seine weitere Drehbewegung und damit der Nachspannvorgang insgesamt ein Ende findet.

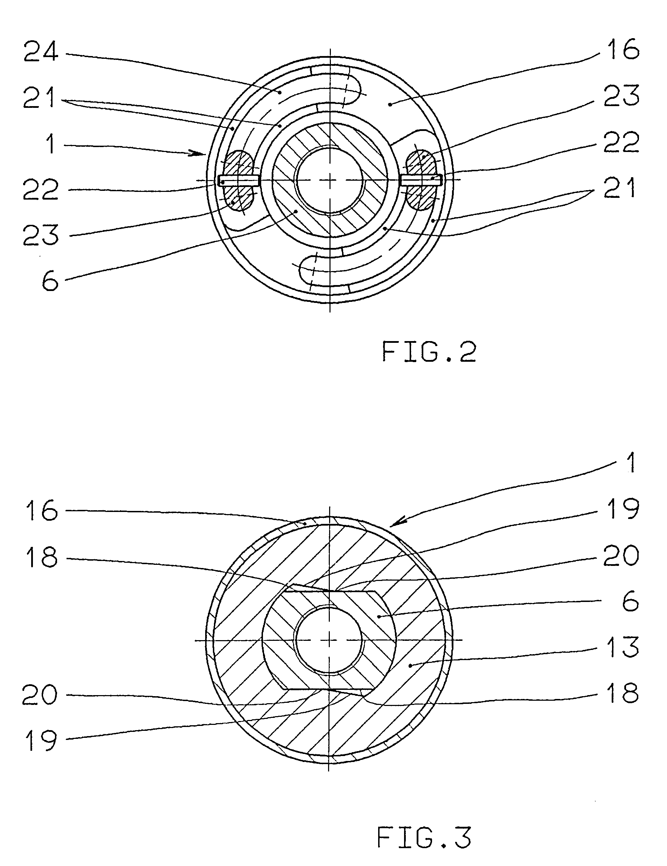

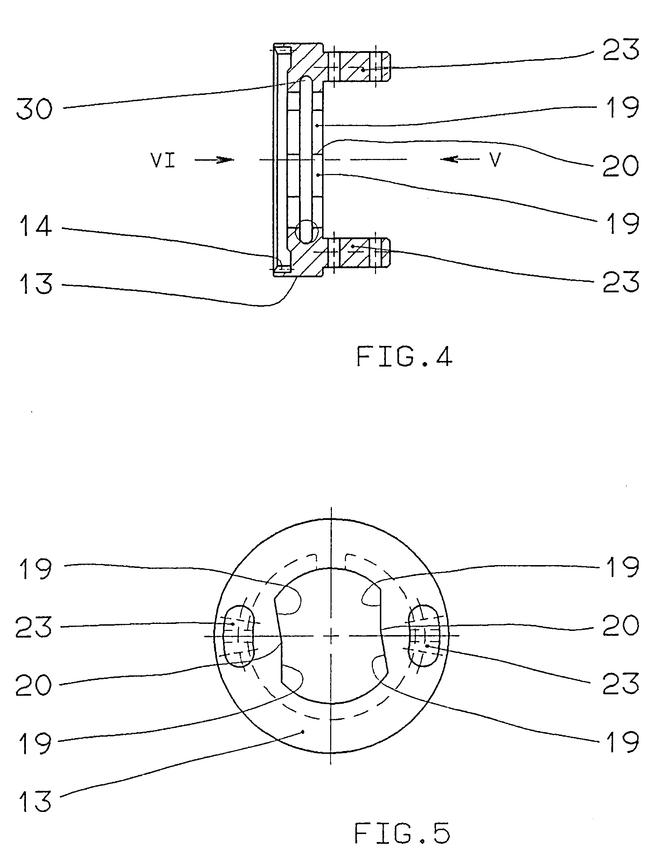

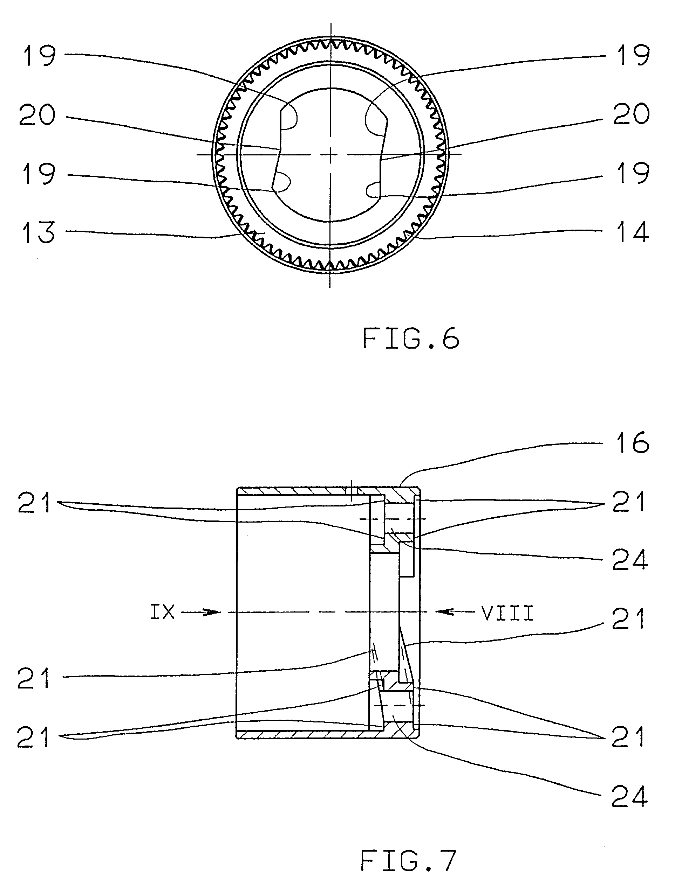

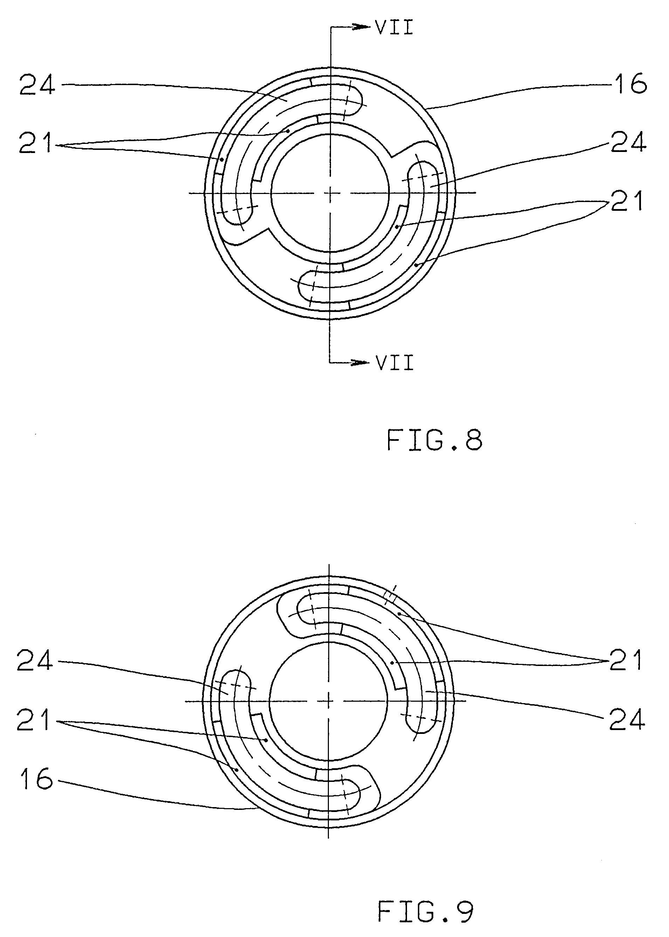

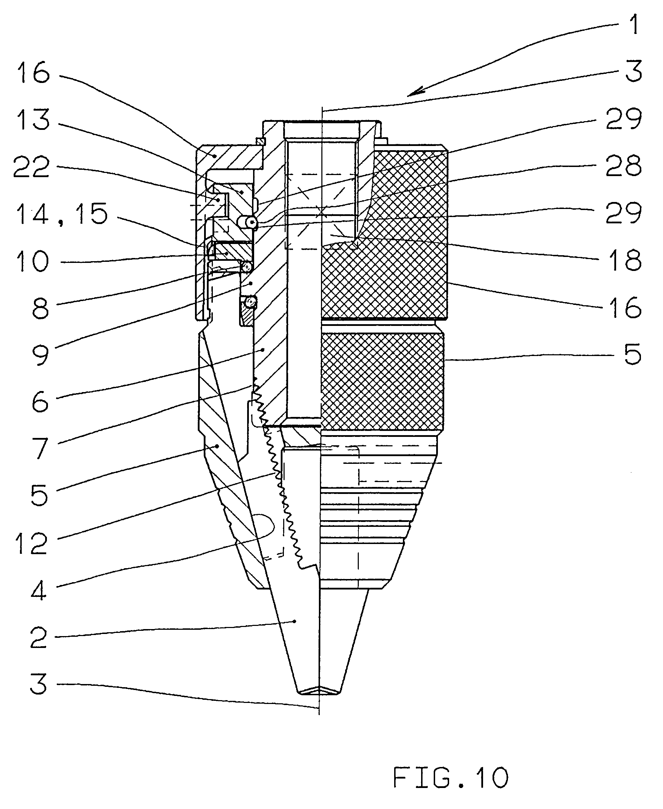

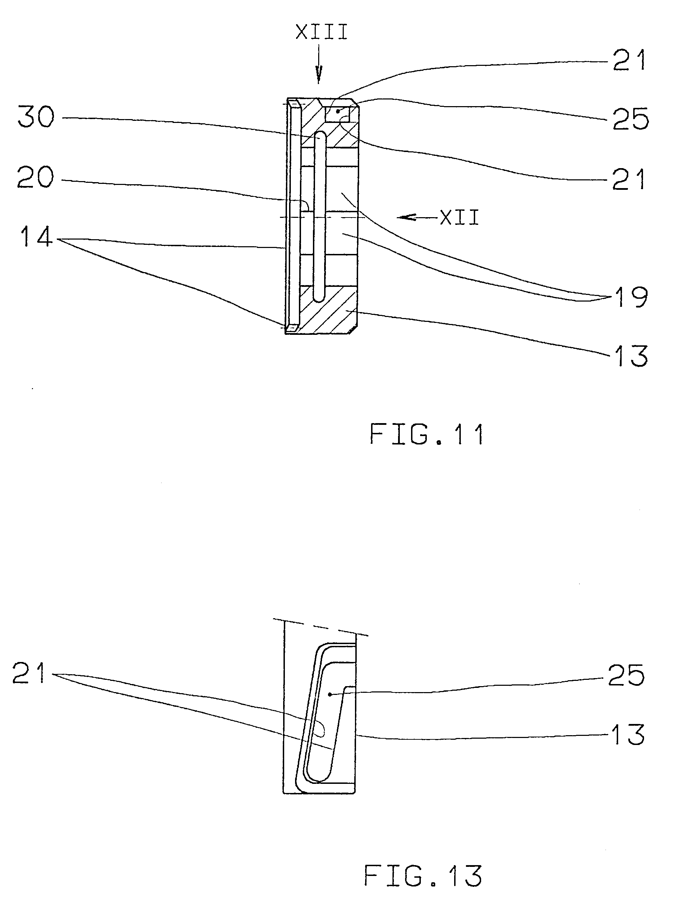

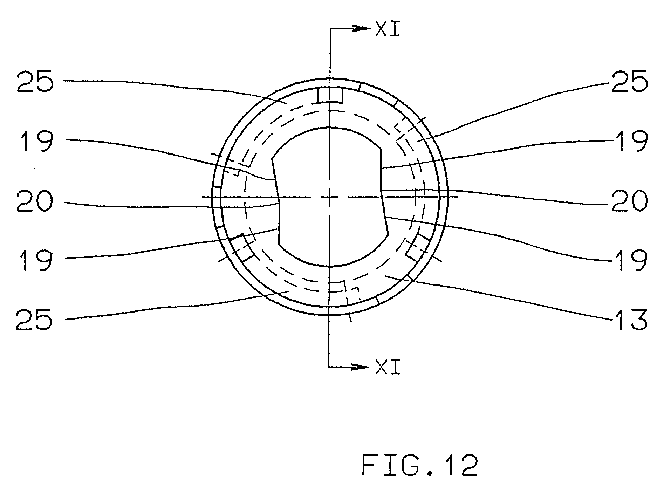

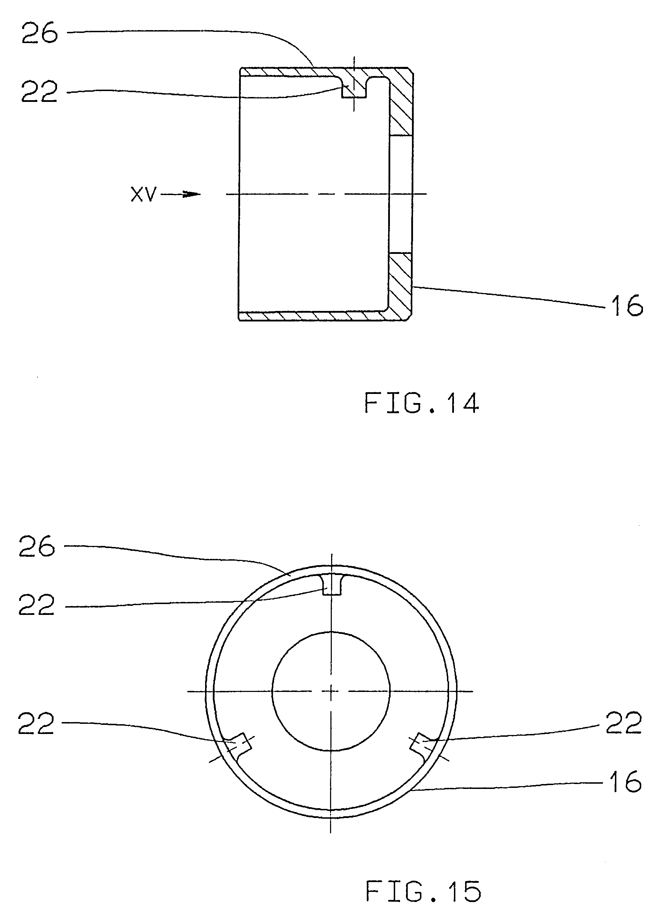

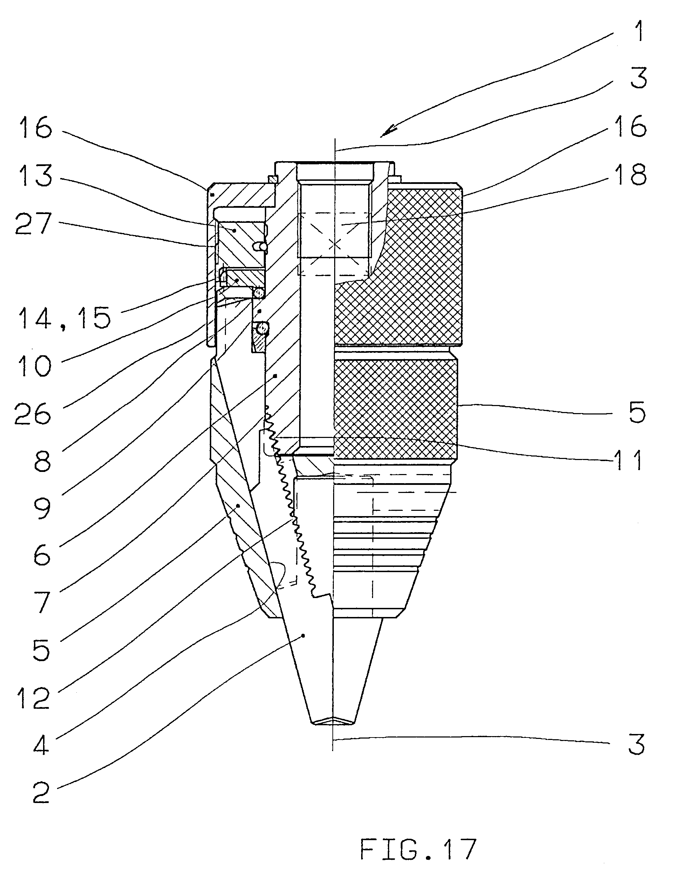

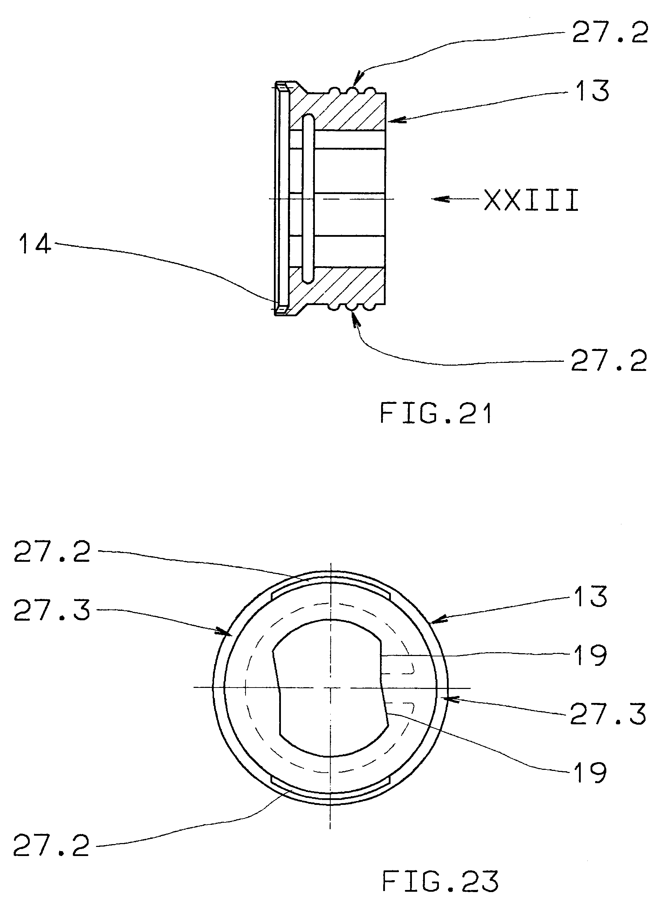

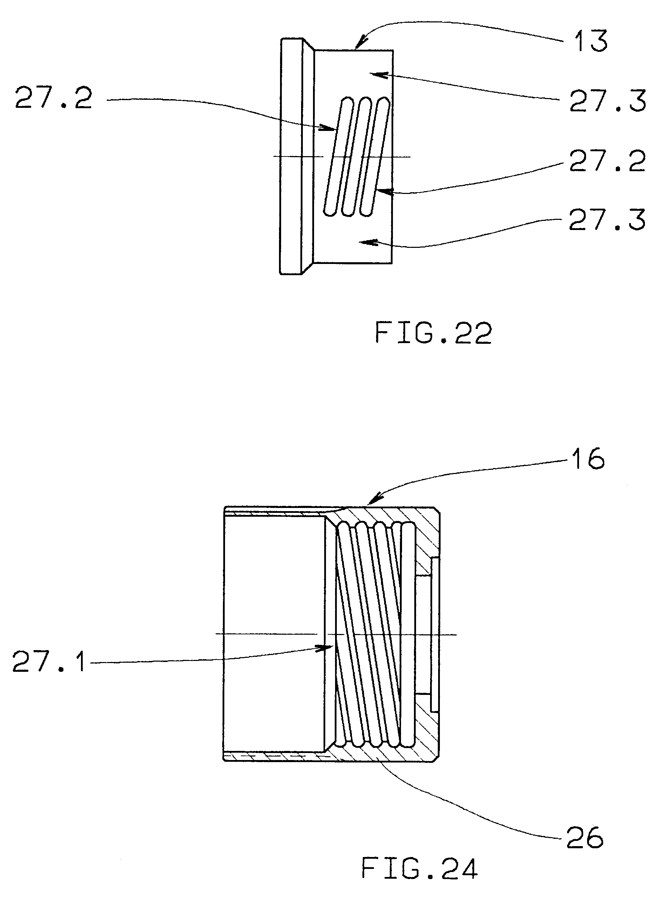

In den Ausführungsbeispielen nach den Fig. 1 bis 9 ist die Getriebeverbindung zwischen dem Betätigungsring 16 und dem Sperring 13 als ein Kurvengetriebe mit Stellkurven 21 am Betätigungsring 16 und von den Stellkurven gesteuerten Stellgliedern 22 am Sperring 13 ausgebildet. Im Ausführungsbeispiel nach den Fig. 10 bis 15 dagegen befinden sich die Stellkurven 21 am Sperring 13 und die Stellglieder 22 am Betätigungsring 16. In allen Fällen bildet dabei die Getriebeverbindung in axialer Richtung eine Zwangsführung des Sperrings 13 am Betätigungsring 16, so daß die jeweilige Stellung des Betätigungsringes 16 die des Sperringes 13 vollständig bestimmt. Im einzelnen kann das Kurvengetriebe auf verschiedene Weise ausgebildet sein. So besitzt der Sperring 13 bei dem Bohrfutter 1 nach den Fig. 1 bis 9 zwei sich diametral gegenüberliegende Zapfen 23, die axial durch entsprechende Fenster 24 im Betätigungsring 16 hindurchgreifen. Die Zapfen 23 tragen axial beidseits der Fenster 24 je einen über den Fensterrand ausgreifenden Stift, der als Steuerglied 22 axial formschlüssig an den als Stellkurven 21 ausgebildeten Fensterrändern geführt ist. Diese Stifte können als drehbar im jeweiligen Zapfen 23 gelagerte und auf den Stellkurven 21 abrollende Walzen ausgebildet sein.
- Beim Bohrfutter nach den Fig. 10 bis 15 sind die Stellkurven 21 durch drei gleichmäßig in Umfangsrichtung über den Sperring 13 verteilte, in der äußeren Umfangsfläche des Sperrings 13 verlaufende Steuernuten 25 gebildet, in die als Stellglieder 22 axial formschlüssig drei entsprechend angeordnete Steuervorsprünge greifen, die an einem die Umfangsfläche des Sperrings 13 außen übergreifenden Kragen 26 des Betätigungsringes 16 sitzen.
- Im Ausführungsbeispiel nach den Fig. 17 und 21 bis 24 schließlich ist die Getriebeverbindung zwischen dem Betätigungsring 16 und dem Sperring 13 als Gewindetrieb 27 ausgebildet. Dieser Gewindetrieb 27 besteht aus einem Außengewinde an der äußeren Umfangsfläche des Sperrings 13 und einem damit im Eingriff stehenden Innengewinde an dem den Sperring 13 außen übergreifenden Kragen 26 des Betätigungsringes 16. Der Gewindetrieb 27 ist mit einem fünfgängigen Gewinde ausgebildet. Am Betätigungsring 16 sind die Gewindegänge 27.1 als Innengewinde vollständig ausgebildet, am Sperring 13 die Gewindegänge des Außengewindes dagegen nur als Gewindegangabschnitte 27.2, die sich nur über einen Teil des Ringumfangs erstrecken und in Umfangsrichtung zwischen sich gewindefreie Lücken 27.3 bilden. Die Gewindegangabschnitte 27.2 besitzen jeweils gleiche Umfangslänge und sind mit untereinander axial fluchtenden Gangenden 27.4 angeordnet, wie gut aus Fig. 22 ersichtlich ist.

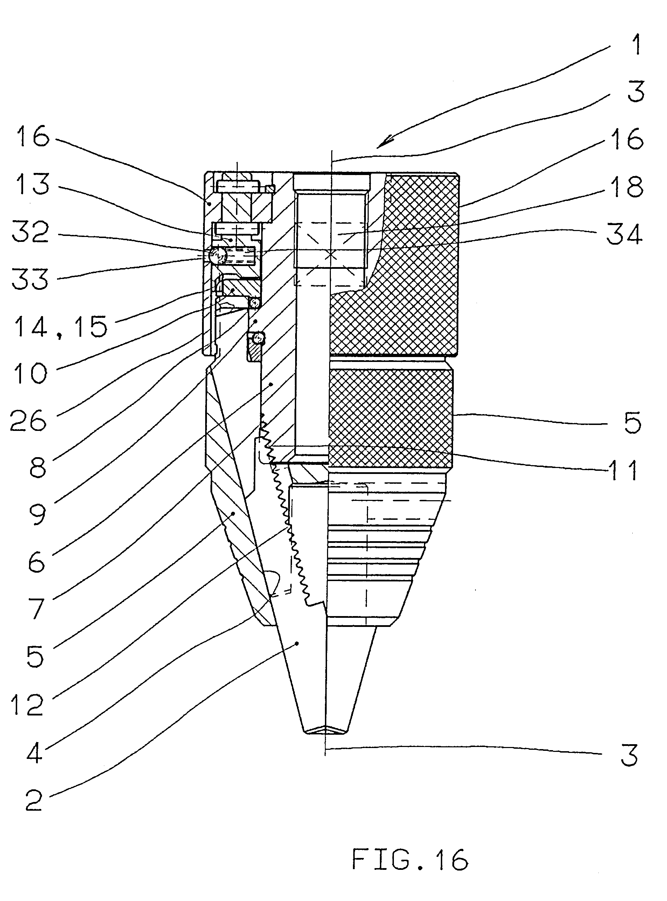

Weiter sind in allen gezeigten Ausführungsbeispielen Rasteinrichtungen vorgesehen, die den Sperring 13 in seinen beiden Axialstellungen, in welchen er die Stellhülse 5 verriegelt oder frei gibt, fixieren, so daß selbsttätige Verstellungen des Sperrings 13 während des Bohrbetriebs ausgeschlossen sind. In den Ausführungsbeispielen nach den Fig. 1 bis 15 und 17 ist diese Rasteinrichtung unmittelbar zwischen dem Sperring 13 und dem Futterkörper 6 ausgebildet und besteht aus einem federnden Rastglied 28 am Sperring 13 und Rastaufnahmen 29 für das Rastglied 28 am Futterkörper 6. Im einzelnen besteht das Rastglied 28 aus einem umfangsmäßig aufgetrennten Federring in einer ihn haltenden Ringnut 30 des Sperrings 13 und zwei die Rastaufnahmen 29 bildenden Ringnuten im Futterkörper 6, die durch eine im Profil als Rastnase 31 wirkende Ringleiste voneinander getrennt sind.
- Im Ausführungsbeispiel nach Fig. 16 dagegen ist die Rasteinrichtung zwischen dem Sperring 13 und dem Betätigungsring 16 ausgebildet. Sie besteht aus einem federnden Rastglied 32 am Sperring 13 und Rastaufnahmen 33 für das Rastglied 32 am Betätigungsring 16. Das Rastglied 32 ist von einer radial nach außen unter der Kraft einer Rastfeder 34 stehenden Rastkugel gebildet, die in einer radialen Bohrung im Sperring 13 angeordnet sind. Die Rastkugel greift unter der Kraft der Rastfeder 34 in die ebenfalls als radiale Bohrungen ausgebildeten Rastaufnahmen 33, die sich in dem den Sperring 13 außen übergreifenden Kragen 26 des Betätigungsrings 16 befinden. Die Rastglieder 32 können zu mehreren in über den Umfang des Sperrings 13 bzw. Betätigungsrings 16 gleichmäßig verteilter Anordnung vorgesehen sein.

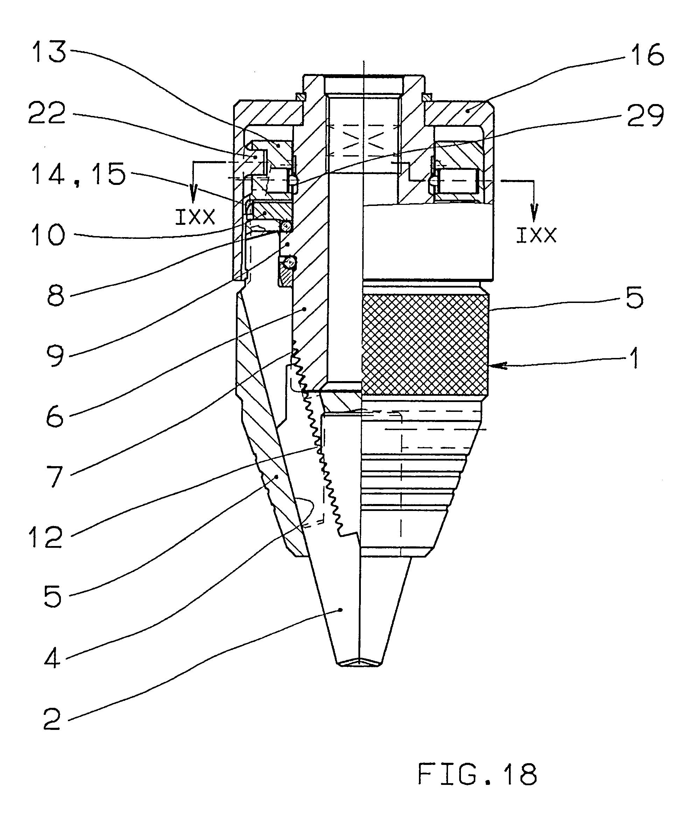

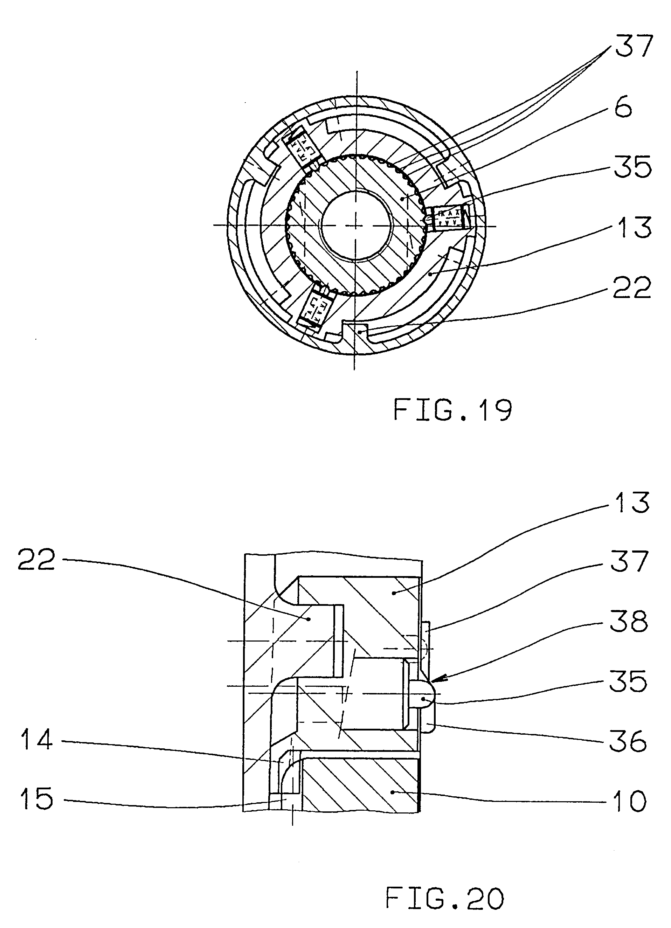

Bei dem Ausführungsbeispiel nach den Fig. 18 bis 20 besteht das Rastglied 28 aus im Sperring 13 radial verstellbar angeordneten Raststiften 35, die unter der Kraft einer Feder dem Futterkörper 6 anliegen. Die Rastaufnahmen 29 bestehen einerseits aus einer Ringnut 36 im Futterkörper 6 sowie aus an die Ringnut 36 auf der den Futterbacken 2 abgewandten Seite anschließenden und axial zum Futterkörper verlaufenden Rastnuten 37, die, wie insbes. aus Fig. 19 ersichtlich, einen Zahnkranz bilden. Zwischen der Ringnut 36 und den Rastnuten 37 ist eine Anlaufschräge 38 für den Raststift 35 vorgesehen, die sich zur Ringnut 36 hin konisch verjüngt. Der Raststift 35 ist in Fig. 20 nur angedeuteter Weise in einer die Feder aufnehmenden Hülse angeordnet, wodurch eine einfache Montage im Sperring 13 erreicht wird. Im einzelnen sind drei gleichmäßig über den Umfang des Sperrings 13 angeordnete Raststifte 35 vorgesehen, die in in der Zeichnung nicht wieder gegebener Weise in axialer Richtung des Sperrings 13 um einen kleinen Abstand gegeneinander versetzt angeordnet sein können, wobei dieser Abstand klein gegenüber dem Verstellhub des Sperrings 13 gewählt ist. Auf diese Weise treten die Raststifte bei einer Verstellung des Sperrings 13 zwischen seinen beiden Axiallagen nacheinander von der einen in die andere Rastaufnahme 29 über.

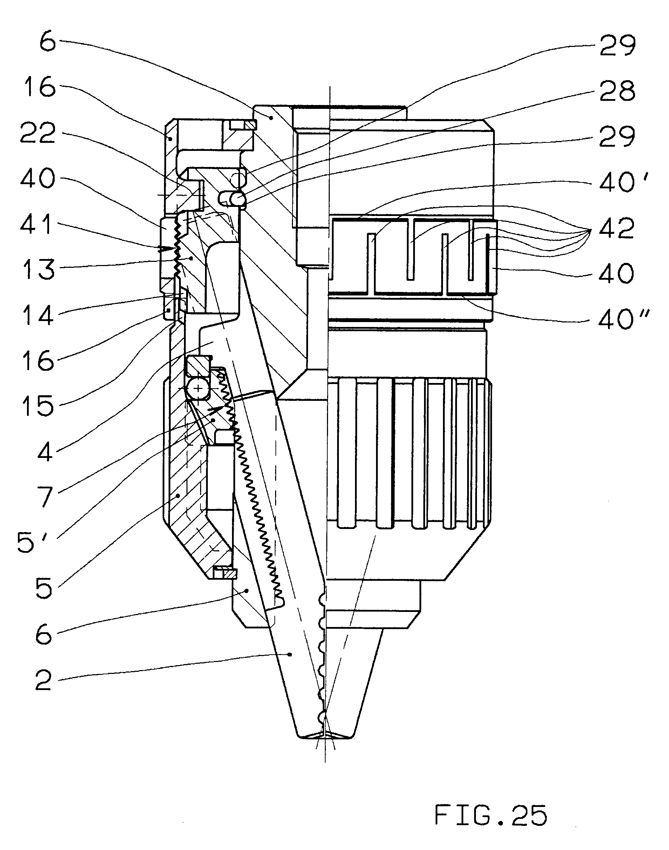

Fig. 25 zeigt ein Bohrfutter ohne Selbst- bzw. Nachspannwirkung. Hier sind die Futterbacken 2 in Führungsbohrungen 4 des Futterkörpers 6 geführt, während sich das Stellgewinde 7 zum Verstellen der Futterbacken 2 an einem Stellring 5' der Stellhülse 5 befindet. Im übrigen entspricht der Aufbau des Futters im wesentlichen dem anhand der Fig. 10 bis 15 schon beschriebenen Ausführungsbeispiel, worauf zur Vermeidung von Wiederholungen Bezug genommen wird. Anders als dort ist aber der Sperring 13 unverdrehbar am Futterkörper 6 geführt und weiter ein Bremsring 40 koaxial und axial unverschiebbar am Betätigungsring 16 angeordnet, der von außen von der Hand erfaßt werden kann. An seiner Innenseite besitzt er Bremsflächen 41, die profiliert sind und welchen an der Außenseite des Futterkörpers 6 entsprechende Bremsflächen zugeordnet sind. Der Bremsring 40 kann von Hand radial federnd zusammengedrückt werden, was dadurch erleichtert wird, daß der Bremsring in Umfangsrichtung aufeinander folgende Axialschlitze 42 aufweist, die abwechselnd zum einen und zum anderen Ringrand 40', 40'' hin offen sind. Wird der Bremsring 40 zusammengedrückt, tritt er über die Bremsflächen 41 in Reibschluß mit dem Sperring 13, so daß der Sperring 13 und mit ihm der Futterkörper 6 über den Bremsring 40 festgehalten werden können, wenn die Stellhülse 5 gedreht und dadurch das Futter gespannt wird. Ist die gewünschte Einspannung des Bohrers erreicht, wird statt des Bremsring 40 nun der Betätigungsring 16 festgehalten, wodurch der Sperring 13 aus seiner Rast 28, 29 in die in Fig. 25 gezeigte Sperrstellung verschoben wird.

## Patentansprüche

1. Bohrfutter mit einem an eine Bohrspindel anschließbaren Futterkörper (6), mit zwischen sich eine Aufnahme für das Bohrwerkzeug bildenden Futterbacken (2), die zum Öffnen und Schließen des Bohrfutters durch eine am Futterkörper drehbar und axial unverschiebbar geführte Stellhülse (5) verstellbar sind, und mit einem am Futterkörper (6) axial verschiebbar geführten Sperring (13) zum Verriegeln der Stellhülse (5), wozu der Sperring (13) eine Verzahnung (14) aufweist, die in gegen die Stellhülse (5) vorgeschobener Lage des Sperrings (13) in eine Gegenverzahnung (15) an der Stellhülse (5) greift und in von der Stellhülse (5) zurückgezogener Lage des Sperrings (13) an der Gegenverzahnung (15) außer Eingriff steht, wobei am Futterkörper (6) drehbar ein Betätigungsring (16) geführt und zwischen dem Betätigungsring (16) und dem Sperring (13) eine Getriebeverbindung vorgesehen ist, die beim Verdrehen des Betätigungsringes (16) den Sperring (13) zwischen seinen beiden, die Stellhülse (5) verriegelnden bzw. freigebenden Axiallagen verschiebt, dadurch gekennzeichnet, daß bei einem Bohrfutter in nachspannender Ausführungsform mit Nachspannungsbegrenzung der Sperring (13) am Futterkörper (6) zwischen zwei Grenzstellungen verdrehbar ist, die in Umfangsrichtung des Futterkörpers (6) um den Nachspannweg auseinander liegen, der im Rahmen der Nachspannungsbegrenzung maximal zugelassen ist, und daß beim Verdrehen des am Futterkörper (6) axial unverschiebbar geführten Betätigungsrings (16) die Getriebeverbindung den Sperring (13) zwischen den beiden Grenzstellungen verdreht.

2. Bohrfutter nach Anspruch 1, dadurch gekennzeichnet, daß die Drehrichtung des Betätigungsrings (16) zum Verriegeln der Stellhülse (5) deren Drehrichtung zum Schließen des Bohrfutters (1) entgegengesetzt ist.

3. Bohrfutter nach Anspruch 1 oder 2, dadurch gekennzeichnet, daß zur Nachspannungsbegrenzung der Futterkörper (6) mindestens eine zur Achse des Futterkörpers (6) parallele und sich über den Verschiebungsbereich des Sperrings (13) erstreckende Planfläche (18) aufweist, der am Sperring (13) zwei jeweils zur Achse des Futterkörpers parallele und zueinander schräge Anschlagflächen (19) gegenüberstehen, die in der auf der Planfläche (18) des Futterkörpers (6) senkrechten Axialebene ineinander übergehen und durch ihre gegenseitige Schrägstellung den Winkel bestimmen, um den der Sperring (13) zum Nachspannen gegenüber dem Futterkörper (6) maximal verdrehbar ist.

4. Bohrfutter nach einem der Ansprüche 1 bis 3, dadurch gekennzeichnet, daß die Getriebeverbindung zwischen dem Betätigungsring (16) und dem Sperring (13) als ein Kurvengetriebe mit einer Stellkurve (21) am einen Teil (Betätigungsring oder Sperring) und einem von der Stellkurve gesteuerten Stellglied (22) am anderen Teil ausgebildet ist.

5. Bohrfutter nach Anspruch 4, dadurch gekennzeichnet, daß die Getriebeverbindung in axialer Richtung eine Zwangsführung des Sperrings (13) am Betätigungsring (16) bildet.

6. Bohrfutter nach Anspruch 5, dadurch gekennzeichnet, daß zur Bildung der Stellkurve (21) in der äußeren Umfangsfläche des Sperrings (13) eine Steuernut (25) verläuft, in die als Stellglied (22) axial formschlüssig ein Steuervorsprung greift, der an einem die Umfangsfläche des Sperrings (13) außen übergreifenden Kragen (26) des Betätigungsrings (16) sitzt.

7. Bohrfutter nach Anspruch 5, dadurch gekennzeichnet, daß der Sperring (13) mindestens einen axial durch ein Fenster (24) im Betätigungsring (16) greifenden Zapfen (23) aufweist, der axial beidseits des Fensters (24) je einen über den Fensterrand ausgreifenden Stift trägt, der als Stellglied (22) axial formschlüssig an den als Stellkurve (21) ausgebildeten Fensterrändern geführt ist.

8. Bohrfutter nach Anspruch 7, dadurch gekennzeichnet, daß die Stifte als drehbar im Zapfen gelagerte und auf den Stellkurven (21) abrollende Walzen ausgebildet sind.

9. Bohrfutter nach einem der Ansprüche 1 bis 3, dadurch gekennzeichnet, daß die Getriebeverbindung zwischen dem Betätigungsring (16) und dem Sperring (13) als Gewindetrieb (27) ausgebildet ist, bestehend aus einem Außengewinde an der äußeren Umfangsfläche des Sperrings (13) und einem damit im Eingriff stehenden Innengewinde an einem den Sperring (13) außen übergreifenden Kragen (26) des Betätigungsrings (16).

10. Bohrfutter nach Anspruch 9, dadurch gekennzeichnet, daß der Gewindetrieb (27) mit einem mehrgängigen Gewinde ausgebildet ist.

11. Bohrfutter nach Anspruch 10, dadurch gekennzeichnet, daß zumindest die Gewindegänge des Außengewindes sich jeweils abschnittsweise nur über einen Teil des Ringumfangs erstrecken, wobei sich in Umfangsrichtung zwischen den Gewindegangabschnitten (27.2) gewindefreie Lücken (27.3) befinden.

12. Bohrfutter nach Anspruch 11, dadurch gekennzeichnet, daß die Gewindegangabschnitte (27.2) jeweils in gleicher Umfangslänge und mit untereinander axial fluchtenden Gangenden (27.4) angeordnet sind.

13. Bohrfutter nach einem der Ansprüche 1 bis 12, dadurch gekennzeichnet, daß eine den Sperring (13) in seinen beiden, die Stellhülse (5) verriegelnden bzw. freigebenden Axiallagen fixierende Rasteinrichtung vorgesehen ist.

14. Bohrfutter nach Anspruch 13, dadurch gekennzeichnet, daß die Rasteinrichtung zwischen dem Sperring (13) und dem Futterkörper (6) ausgebildet ist, aus einem federnden Rastglied (28) am einen Teil (Sperring oder Futterkörper) sowie Rastaufnahmen (29) für das Rastglied (28) am anderen Teil besteht und im eingerasteten Zustand die Axialverstellung des Sperrings (13) gegenüber dem Futterkörper (6) behindert.

15. Bohrfutter nach Anspruch 14, dadurch gekennzeichnet, daß das Rastglied (28) aus einem umfangsmäßig aufgetrennten Federring in einer Ringnut (30) des Sperrings (13) und zwei die Rastaufnahmen (29) bildenden Ringnuten im Futterkörper (6) besteht.

16. Bohrfutter nach Anspruch 14, dadurch gekennzeichnet, daß das Rastglied (28) aus wenigstens einem im Sperring (13) radial verstellbar angeordneten und unter der Kraft einer Feder dem Futterkörper (6) anliegenden Raststift (35) besteht und die Rastaufnahmen (29) aus einer Ringnut (36) im Futterkörper (6) sowie aus an die Ringnut (36) auf der den Futterbacken (2) abgewandten Seite anschließenden und axial zum Futterkörper verlaufenden, einen Zahnkranz bildenden Rastnuten (37) bestehen.

17. Bohrfutter nach Anspruch 16, dadurch gekennzeichnet, daß zwischen der Ringnut (36) und den Rastnuten (37) eine zur Ringnut (36) hin sich konisch verjüngende Anlaufschräge (38) für den Raststift (35) vorgesehen ist.

18. Bohrfutter nach Anspruch 16 oder 17, dadurch gekennzeichnet, daß der Raststift (35) in einer die Feder aufnehmenden Hülse angeordnet ist.

19. Bohrfutter nach einem der Ansprüche 16 bis 18, dadurch gekennzeichnet, daß das Rastglied (28) von drei gleichmäßig über den Umfang des Sperrings (13) angeordneten Raststiften (35) gebildet ist, die in axialer Richtung des Sperrings (13) um einen gegenüber dem Verstellhub des Sperrings (13) kleinen Abstand gegeneinander versetzt angeordnet sind.

20. Bohrfutter nach Anspruch 13, dadurch gekennzeichnet, daß die Rasteinrichtung zwischen dem Sperring (13) und dem Betätigungsring (16) ausgebildet ist, aus einem federnden Rastglied (32) am einen Teil (Sperring oder Betätigungsring) sowie Rastaufnahmen (33) für das Rastglied (32) am anderen Teil besteht und im eingerasteten Zustand das Verdrehen des Betätigungsrings (16) gegenüber dem Sperring (13) behindert.

21. Bohrfutter nach den Ansprüchen 1 bis 20, dadurch gekennzeichnet, daß in Verbindung mit dem Betätigungsring (16) Mittel zum direkten Halten des Sperrings (13) von Hand vorgesehen sind.

22. Bohrfutter nach Anspruch 21, dadurch gekennzeichnet, daß die Mittel zum direkten Halten des Sperrings (13) aus einem von Hand faßbaren Bremsring (40) bestehen, der koaxial und axial unverschiebbar am Betätigungsring (16) angeordnet ist und auf seiner Innenseite dem Sperring (13) anliegende Bremsflächen (41) aufweist, mit welchen der Bremsring von Hand an den Sperring andrückbar ist.

23. Bohrfutter nach Anspruch 22, dadurch gekennzeichnet, daß der Bremsring (40) von Hand radial federnd zusammendrückbar ist und dazu in Umfangsrichtung aufeinander folgende Axialschlitze (42) aufweist, die abwechselnd zum einen und zum anderen Ringrand hin offen sind.

## Claims

1. Drill chuck with a chuck body (6) connectable to a drill spindle, with chuck jaws (2) which form between them a receiver for the boring tool and which, for opening and closing the drill chuck, are adjustable by an adjusting sleeve mounted rotatably but in an axially fixed position on the chuck body, and with a locking ring (13) mounted in an axially movable manner on the chuck body (6) and serving to lock the adjusting sleeve (5), for which purpose the locking ring (13) has a toothing (14) which engages a counter-toothing (15) on the adjusting sleeve (5) when the locking ring (13) has been pushed forward towards the adjusting sleeve (5) and is in a disengaged position on the counter-toothing (15) when the locking ring (13) has been drawn back from the adjusting sleeve (5) while an actuating ring (16) is rotatably mounted on the chuck body (6) and a gearing connection is provided between the actuating ring (16) and the locking ring (13) and on the rotation of the actuating ring (16) moves the locking ring (13) between its two axial positions which respectively lock and release the adjusting sleeve (5), characterized in that with a drill chuck constructed to be re-tightened and with a re-tightening limiting system the locking ring (13) is rotatable on the chuck body (6) between two extreme positions which over the periphery of the chuck body (6) are separated from each other by the maximum re-tightening distance permissible within the re-tightening limit, and that on the rotation of the actuating ring (16) mounted in an axially fixed position on the chuck body (6) the gearing connection rotates the locking ring (13) between the two extreme positions.

2. Drill chuck according to Claim 1, characterized in that the direction of rotation of the actuating ring (16) for locking the adjusting sleeve (5) is opposite to its direction of rotation for closing the drill chuck (1).

3. Drill chuck according to Claims 1 or 2, characterized in that for delimiting the re-tightening purposes the chuck body (6) has at least one plane surface (8) which is parallel to the axis of the chuck body (6) and extends over the displacement range of the locking ring (13) and opposite to which are situated in the locking ring two stop surfaces (19) which are each parallel to the axis of the chuck body and which at an angle in respect of each other and which continue in each other in the axial plane perpendicular to the plane surface (18) of the chuck body (6) and which by their oblique position in respect of each other determine the maximum angle through which the locking ring (13) can be rotated in relation to the chuck body (6) for re-lightening purposes.

4. Drill chuck according to any one of Claims 1-3, characterized in that the gearing connection between the actuating ring (16) and the locking ring (13) is constructed as a cam mechanism with an adjusting cam (21) on one part (actuating ring or locking ring) and a regulating element controlled by the adjusting cam (22) on the other part.

5. Drill chuck according to Claim 4, characterized in that the gearing connection forms in the axial direction a restricted guiding means for the locking ring (13) on the actuating ring (16).

6. Drill chuck according to Claim 5, characterized in that to form the control cam (21) the outer peripheral surface of the locking ring (13) contains a control groove (25) engaged by a control projection which as a control element (22) exerts a positive locking action in the axial direction and which rests on a collar (26) belonging to the actuating ring (16) and extending outwards beyond the peripheral surface of the locking ring (13).

7. Drill chuck according to Claim 5, characterized in that the locking ring (13) has at least one journal (23) which extends axially through a window (24) in the actuating ring (16) and which on either side of the window (24) bears a pin which extends beyond the edge of the window and which as a control element (22) is positioned, with a positive locking effect in the axial direction, on the edges of the window, which are constructed as a control cam (21).

8. Drill chuck according to Claim 7, characterized in that the pins take the form of rollers rotatably mounted in the journal and rolling over the adjusting cams (21).

9. Drill chuck according to any one of Claims 1-3, characterized in that the gearing connection between the actuating ring (16) and the locking ring (13) is constructed as a threaded drive (27) consisting of an external thread on the outer peripheral surface of the locking ring (13) and an internal thread in engagement therewith and provided on a collar (26) which belongs to the actuating ring (16) and which extends outwards beyond the locking ring (13).

10. Drill chuck according to Claim 9, characterized in that the threaded drive (27) is constructed with a multiple thread system.

11. Drill chuck according to Claim 10, characterized in that at least the turns of the outer thread in each case only extends over a part of the periphery of the ring, gaps (27.3) without threads occur between the threaded sections (27.2) in the peripheral direction.

12. Drill chuck according to Claim 11, characterized in that the threaded sections (27.2) are all positioned over an equal length of the periphery, the ends of the threads (27.4) being axially aligned with one another.

13. Drill chuck according to any one of Claims 1-12, characterized in that a catch system is provided which secures the locking ring (13) in either of its two axial positions, locking or releasing the adjusting sleeve (5) as the case may be.

14. Drill chuck according to Claim 13, characterized in that the catch system is formed between the locking ring (13) and the chuck body (6), consists of a resilient catch element (28) on one part (locking ring or chuck body) and catch recesses (29) for the catch element (28) on the other part and when in the engaged position prevents axial displacement of the locking ring (13) in relation to the chuck body (6).

15. Drill chuck according to Claim 14, characterized in that the catch element (28) consists of a peripherally subdivided spring ring in an annular groove (30) of the locking ring (13) and two annular grooves in the chuck body which form the catch recesses (29).

16. Drill chuck according to Claim 15, characterized in that the catch element (28) consists of at least one detent pin (35) radially adjustable in the locking ring (13) and caused by the force of a spring to rest against the chuck body (6) and that the catch recesses (29) and of detent grooves (37) immediately following the annular groove (36) on the side farther away from the chuck jaws (2) and situated axially in respect of the chuck body and forming a toothed rim.

17. Drill chuck according to Claim 16, characterized in that between the annular groove (36) and the detent grooves (37) a slanting stop face (38) tapering conically towards the annular groove (36) is provided for the detent pin (35).

18. Drill chuck according to Claim 16 or 17, characterized in that the detent pin (35) is situated in a sleeve accommodating the spring.

19. Drill chuck according to any one of Claims 16-18, characterized in that the catch element (28) is formed by three detent pins (35) which are evenly spaced apart over the periphery of the locking ring (13) and which in the axial direction of the locking ring (13) are staggered in respect of one another by a short distance in relation to the displacement stroke of the locking ring (13).

20. Drill chuck according to Claim 13, characterized in that the catch system is formed between the locking ring (13) and the actuating ring (16), consists of a resilient catch element (32) on one part (locking ring or actuating ring) and catch recesses (33) for the catch element (32) on the other part and when in the engaged position prevents rotation of the actuating ring (16) in relation to the locking ring (13).

21. Drill chuck according to Claims 1-20, characterized in that the means for directly holding the locking ring (13) by hand are provided in conjunction with the actuating ring (16).

22. Drill chuck according to Claim 21, characterized in that the means for directly holding the locking ring (13) consist of a brake ring (40) which can be gripped with the hand and which is mounted coaxially and in an axially non-displaceable manner on the actuating ring (16) and of which the inside is provided with brake surfaces (41) which rest against the locking ring (13) and by which the brake ring can be pressed by hand against the locking ring.

23. Drill chuck according to Claim 22, characterized in that the brake ring (40) can be resiliently compressed in the radial direction by hand, for which purpose it is provided with axial slits (42) which succeed one another in the peripheral direction and which are open towards one edge of the ring and towards the other edge of the ring in alternation with one another.

## Revendications

1. Mandrin porte-foret comportant un corps (6) pouvant être raccordé à une broche de perçage, des mâchoires (2) délimitant entre elles un logement pour l'outil de perçage et déplaçables pour l'ouverture et la fermeture du mandrin à l'aide d'une douille de réglage (5) guidée de manière à pouvoir tourner sur le corps du mandrin, sans possibilité de déplacement axial, et une bague de blocage (13) guidée sur le corps (6) du mandrin de manière à être déplaçable axialement et servant à verrouiller la douille de réglage (5), la bague de blocage (13) comportant à cet effet une denture (14), qui, lorsque la bague de blocage (13) est dans une position avancée contre la douille de réglage (5), engrène dans une denture antagoniste (15) située sur la douille de réglage (5) et, lorsque la bague de blocage (13) est dans une position rétractée par rapport à la douille de réglage (5), est dégagée de la denture antagoniste (15), et dans lequel une bague d'actionnement (16) est guidée avec possibilité de rotation sur le corps (6) du mandrin, et entre la bague d'actionnement (16) et la bague de blocage (13) est prévue une liaison de transmission qui, lors de la rotation de la bague d'actionnement (16), déplace la bague de blocage (13) entre ses deux positions axiales de verrouillage et de libération de la douille de réglage (5), caractérisé en ce que, dans le cas d'un mandrin porte-foret dans une forme de réalisation à resserrage avec limitation de resserrage, la bague de blocage (13) peut tourner sur le corps (6) du mandrin, entre deux positions limites, qui sont écartées l'une de l'autre, dans la direction circonférentielle du corps (6) du mandrin, de la course de resserrage qui est autorisée au maximum dans le cadre de la limitation du resserrage, et que lors de la rotation de la bague d'actionnement (16) guidée sans possibilité de déplacement axial sur le corps (6) du mandrin, la liaison de transmission fait tourner la bague de blocage (13) entre les deux positions limites.

2. Mandrin porte-foret selon la revendication 1, caractérisé en ce que le sens de rotation de la bague d'actionnement (16) pour le verrouillage de la douille de réglage (5) est opposé au sens de rotation pour la fermeture du mandrin porte-foret (1).

3. Mandrin porte-foret selon la revendication 1 ou 2, caractérisé en ce que pour la limitation du resserrage, le corps (6) du mandrin possède au moins une surface plane (18), qui est parallèle à l'axe du corps (6) du mandrin et s'étend sur la zone de translation de la bague de blocage (13) et en vis-à-vis de laquelle sont présentes, sur la bague de blocage (13), deux surfaces de butée (19) qui sont respectivement parallèles à l'axe du corps du mandrin et sont inclinées l'une par rapport à l'autre et qui se rejoignent dans le plan axial perpendiculaire à la surface plane (18) du corps (6) du mandrin et déterminent, par leur inclinaison réciproque, l'angle, dont la bague de blocage (13) peut tourner au maximum pour le resserrage, par rapport au corps (6) du mandrin.

4. Mandrin porte-foret selon l'une des revendications 1 à 3, caractérisé en ce que la liaison de transmission entre la bague d'actionnement (16) et la bague de blocage (13) est agencée sous la forme d'une transmission à cames possédant une came de réglage (21) située sur une partie (bague d'actionnement ou bague de blocage) et un organe de réglage (22) commandé par la came de réglage et situé sur l'autre partie.

5. Mandrin porte-foret selon la revendication 4, caractérisé en ce que la liaison de transmission dans la direction axiale réalise un guidage forcé de la bague de blocage (13) sur la bague d'actionnement (16).

6. Mandrin porte-foret selon la revendication 5, caractérisé en ce que pour la formation de la came de réglage (21), dans la surface circonférentielle extérieure de la bague de blocage (13) s'étend une rainure de commande (25), dans laquelle s'engage axialement selon une liaison par formes complémentaires, en tant qu'organe de réglage (22), un appendice saillant de commande, qui est situé sur le collet (26) de la bague d'actionnement (16), qui s'engage extérieurement par-dessus la surface circonférentielle de la bague de blocage (13).

7. Mandrin porte-foret selon la revendication 5, caractérisé en ce que la bague de blocage (13) possède au moins un appendice saillant (23) qui s'engage axialement dans une fenêtre (24) ménagée dans la bague d'actionnement (16) et qui porte axialement, des deux côtés de la fenêtre (24), respectivement une tige qui ressort au-delà du bord de la fenêtre et est guidée axialement selon une liaison par formes complémentaires, en tant qu'organe de réglage (22), contre les bords de la fenêtre agencés sous la forme de cames de réglage (21).

8. Mandrin porte-foret selon la revendication 7, caractérisé en ce que les tiges sont agencées sous la forme de rouleaux qui sont montés de manière à pouvoir tourner dans l'appendice saillant et roulent sur les cames de réglage (21).

9. Mandrin porte-foret selon l'une des revendications 1 à 3, caractérisé en ce que la liaison de transmission entre la bague d'actionnement (16) et la bague de blocage (13) est réalisée sous la forme d'un système d'entraînement fileté (27), constitué par un filetage extérieur situé sur la surface circonférentielle extérieure de la bague de blocage (13), et un taraudage, qui engrène avec le filetage extérieur et est présent dans un collet (26) de la bague d'actionnement (16), qui s'engage extérieurement par-dessus la bague de blocage (13).

10. Mandrin porte-foret selon la revendication 9, caractérisé en ce que le dispositif d'entraînement à filetage (27) est agencé sous la forme d'un filetage à plusieurs filets.

11. Mandrin porte-foret selon la revendication 10, caractérisé en ce qu'au moins les pas du filetage extérieur s'étendent respectivement par endroits uniquement sur une partie de la circonférence annulaire, tandis que des espaces vides sans filetage (27.3) sont situés dans la direction circonférentielle entre les sections filetées (27.2).

12. Mandrin porte-foret selon la revendication 11, caractérisé en ce que les sections filetées (27.2) sont disposées respectivement sur la même longueur circonférentielle et avec des extrémités de filets (27.4), qui sont alignées axialement entre elles.

13. Mandrin porte-foret selon l'une des revendications 1 à 12, caractérisé en ce qu'il est prévu un dispositif d'encliquetage qui fixe la bague de blocage (13) dans ses deux positions axiales de verrouillage ou de libération de la douille de réglage (5).

14. Mandrin porte-foret selon la revendication 13, caractérisé en ce que le dispositif d'encliquetage est formé entre la bague de blocage (13) et le corps (6) du mandrin, est constituée par un organe d'encliquetage élastique (28) situé sur une partie (bague de blocage ou corps du mandrin) ainsi que par des logements d'encliquetage (29) pour l'organe d'encliquetage (28) sur l'autre partie, et empêche, à l'état encliqueté, le déplacement axial de la bague de blocage (13) par rapport au corps (6) du mandrin.

15. Mandrin porte-foret selon la revendication 14, caractérisé en ce que l'organe d'encliquetage (28) est constitué par une bague élastique, qui est divisée au niveau de sa circonférence et est placée dans une gorge annulaire (30) de la bague de blocage (13), et par deux gorges annulaires, qui forment les logements d'encliquetage (29) et sont ménagées dans le corps (6) du mandrin.

16. Mandrin porte-foret selon la revendication 14, caractérisé en ce que l'organe d'encliquetage (28) est constitué par au moins une tige d'encliquetage (35), qui est disposée de manière à être déplaçable radialement dans la bague de blocage (13) et s'applique sur le corps (6) du mandrin sous l'action de la force d'un ressort, et que les logements d'encliquetage (29) sont constitués par une gorge annulaire (36) ménagée dans le corps (6) du mandrin ainsi que par des gorges d'encliquetage (37) qui se raccordent à la gorge annulaire (36) sur le côté tourné à l'opposé des mâchoires (2) du mandrin, et s'étendent axialement par rapport au corps du mandrin et forment une couronne dentée.

17. Mandrin porte-foret selon la revendication 16, caractérisé en ce qu'entre la gorge annulaire (36) et les gorges d'encliquetage (37) est prévue une rampe de montée (38), qui se rétrécit avec une forme conique en direction de la gorge annulaire (36), pour la tige d'encliquetage (35).

18. Mandrin porte-foret selon la revendication 16 ou 17, caractérisé en ce que la tige d'encliquetage (35) est disposée dans une douille qui loge le ressort.

19. Mandrin porte-foret selon l'une des revendications 16 à 18, caractérisé en ce que l'organe d'encliquetage (28) est formé par trois tiges d'encliquetage (35) qui sont disposées en étant réparties uniformément sur la périphérie de la bague de blocage (13) et qui sont disposées en étant décalées réciproquement, dans la direction axiale de la bague de blocage (13), d'une distance faible par rapport à la course de déplacement de la bague de blocage (13).

20. Mandrin porte-foret selon la revendication 13, caractérisé en ce que le dispositif d'encliquetage est situé entre la bague de blocage (13) et la bague d'actionnement (16) et est constitué par un organe d'encliquetage élastique (32) situé sur une partie (bague de blocage ou bague d'actionnement) ainsi que par des logements d'encliquetage (33) pour l'organe d'encliquetage (32) présents dans l'autre partie, et, dans son état encliqueté, empêche la rotation de la bague d'actionnement (16) par rapport à la bague de blocage (13).

21. Mandrin porte-foret selon les revendications 1 à 20, caractérisé en ce que des moyens pour retenir directement la bague de blocage (13) à la main sont prévus en liaison avec la bague d'actionnement (16).

22. Mandrin porte-foret selon la revendication 21, caractérisé en ce que les moyens pour retenir directement la bague de blocage (13) sont constitués par une bague de freinage (40) pouvant être saisie à la main et qui est disposée coaxialement et sans possibilité de déplacement axial sur la bague d'actionnement (16) et possède, sur sa face intérieure, des surfaces de freinage (41) qui s'appliquent contre la bague de blocage (13) et au moyen desquelles la bague de freinage peut être serrée manuellement contre la bague de blocage.

23. Mandrin porte-foret selon la revendication 22, caractérisé en ce que la bague de freinage (40) peut être serrée élastiquement radialement à la main et comporte à cet effet des fentes axiales (42), qui se succèdent dans la direction circonférentielle et qui sont ouvertes alternativement vers un bord et vers l'autre bord de la bague.
